Europäisches Patentamt

European Patent Office

Office européen des brevets

(11) Publication number: **0 420 087 A2**

## EUROPEAN PATENT APPLICATION

(21) Application number: **90118252.7**

(51) Int. Cl.⁵: **G03B 17/55, G03B 17/52**

(22) Date of filing: **22.09.90**

(30) Priority: **26.09.89 IT 4170989**

(43) Date of publication of application:
**03.04.91 Bulletin 91/14**

(84) Designated Contracting States:
**AT BE CH DE DK ES FR GB GR LI NL SE**

(71) Applicant: **Fiorentini, Achille**
**Via Genova 23**
**I-35141 Padova(IT)**

(72) Inventor: **Fiorentini, Achille**
**Via Genova 23**
**I-35141 Padova(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) Camera back with heating elements for self-developing film.

(57) The invention relates to a new camera back for the containment of self-developing film to be used in various types of cameras. The camera back, internally, contains a thermal detector and electrical resistances fed by batteries or by mains supply, which maintain the film at optimum temperature.

Fig. 1

EP 0 420 087 A2

## CAMERA BACK WITH HEATING ELEMENTS FOR SELF-DEVELOPING FILM

The present invention relates to a camera back for self-developing films.

In the sector of cameras using a self-developing film there exists the problem of maintaining the self-developing film at a constant temperature of about 24ºC.

It is known that the chemical process of development of a photograph must come about in an optimum temperature otherwise the photographic result is compromised.

In fact lower temperatures, caused by cold external environment, provoke chromatic alterations which can render the photograph unusable.

At present to obviate these inconveniences provisional and untrustworthy methods are used such as placing the camera back on a radiator still obtaining bad photographs if left so for some time.

The above mentioned problems exist in the sector of both amateur and professional photography.

The invention solves the described problems in as much as that the temperature of the interior of the camera back, which contains the film pack, is kept constant at an optimum value which for the most part of films on the market is about 24ºC.

Inside the camera back, near the film pack there is a thermal detector which measures the internal temperature. On the external side of the camera back there is an electronic circuit which regulates the system. The circuit is equipped with two warning lights, red and green, which turn on, the first when temperature is not correct for use, the second when the temperature measured by the thermal detector is 24ºC with deviation of plus or minus 0,5 degrees.

The circuit controls the turning on of one or more of the resistances placed in direct vicinity of the back.

The resistances may be fed by mains supply or batteries which can be substituted or re-charged.

As cover and protection of all there is a protective cover which has a good insulating capacity.

As a not limitative example a practical realization of the invention is illustrated.

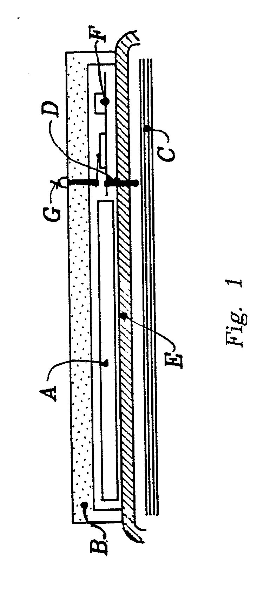

In fig. 1 a schematic section of the camera back is shown where the letter C indicates the self-developing film pack which is covered by a wall E which can be very thin or even non existant. In contact with the wall E are placed the electrical resistances A which are connected to the electronic circuit F which, according to signals sent by the thermal detector D, provokes the turning on of the resistances A. All is closed in and protected by a back B which is made of thermoinsulated material while one or more warning lights G show externally the activity of the resistances and whether the internal temperature is suitable for the exposure and development of the film. The described solution is adaptable to already existing camera backs.

Another equivalent solution consists in creating in the interior of the camera back a larger space than that already existing where apart from the film and thermal detector the resistances are also placed. The electronic circuit can also be inserted in this space.

These are the schematic modalities sufficient for the expert to produce the invention and consequently, in its practical application there can be variations without compromising the substance of the innovate concept.

## Claims

1. Camera back for self-developing film characterized by the fact of possessing a thermal detector (D) placed in the vicinity of the film (C) and of having one or more electrical resistances (A) which, controlled by an electronic circuit (F), heats the internal environment of the camera back (B) which contains the self-developing film (C).

2. Camera back for self-developing film as per claim 1 characterized by the fact that the thermal detector (D) is set to a pre-established temperature and provokes by means of an electronic circuit (F ) the turning on and off of the electrical resistances (A).

3. Camera back as per claims 1 and 2 characterized by the fact that there is a thermostat to regulate the temperature at different values in relation to the type of self-developing film (C).

4. Camera back for self-developing film as per claims 1, 2 or 3, characterized by the fact that on the electronic circuit (F) there are one or more luminous points (G) of different colours to indicate that the desired temperature has been reached in the internal environment containing the film (C).

5. Camera back for self-developing film as per claims 1,2,3 or 4, characterized by the fact that the external wall (B) is of thermoinsulating material.

6. Camera back for self-developing film according to at lest one of the preceding claims characterized by the fact that between the resistances (A) and the external cover (B) there are one or more layers of thermoinsulating material.

Fig. 1